(19) Europäisches Patentamt
European Patent Office
Office européen des brevets

(11) **EP 2 830 256 B1**

(12) **FASCICULE DE BREVET EUROPEEN**

(45) Date de publication et mention
de la délivrance du brevet:
**20.12.2017 Bulletin 2017/51**

(51) Int Cl.:
*H04L 5/06* *(2006.01)*      *H04W 74/00* *(2009.01)*
*H04W 76/02* *(2009.01)*      *H04W 16/02* *(2009.01)*

(21) Numéro de dépôt: **14178397.7**

(22) Date de dépôt: **24.07.2014**

(54) **Procédé pour améliorer la prise de liaison en bande HF en utilisant une capacité large bande**

Verfahren zum Verbessern der Verbindungsherstellung im HF-Bandbereich durch Verwendung einer Breitbandkapazität

Method for enhancing HF band connection using a broadband capacity

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **25.07.2013 FR 1301791**

(43) Date de publication de la demande:
**28.01.2015 Bulletin 2015/05**

(73) Titulaire: **Thales**
**92400 Courbevoie (FR)**

(72) Inventeur: **Lamy-Bergot, Catherine**
**92622 Gennevilliers Cedex (FR)**

(74) Mandataire: **Dudouit, Isabelle et al**
**Marks & Clerk France**
**Conseils en Propriété Industrielle**
**Immeuble " Visium "**
**22, avenue Aristide Briand**
**94117 Arcueil Cedex (FR)**

(56) Documents cités:
**EP-A1- 2 418 892      EP-A1- 2 458 770**
**US-B1- 7 180 970**

**Description**

L'invention concerne un procédé permettant d'améliorer la prise de liaison en bande haute fréquence ou bande HF en utilisant une capacité large bande, c'est-à-dire supérieure à la bande utile du signal de communication. Elle est utilisée pour la prise de liaison entre des postes HF, dont au moins l'appelant ou l'appelé dispose d'une capacité d'émission ou de réception en large bande et souhaite utiliser cette capacité pour accélérer sa prise de liaison tout en restant compatible des solutions actuelles qui travaillent avec des postes radio bande étroite, typiquement de la classe de plusieurs kHz voire quelques dizaines de kHz (à rapprocher des modulations habituellement utilisées sur cette bande de fréquence qui sont souvent de largeur 3kHz).

Le procédé est par exemple utilisé pour réaliser une prise de liaison en bande étroite (typiquement sur un canal de 3 kHz) correspondant aux capacités actuelles pour établir une liaison dite bas et moyen débit ou pour accélérer la phase de prise de liaison dite bande étroite proposée pour des postes à très haut débit tels que ceux décrits dans la demande de brevet du demandeur EP 2744263. Elle s'applique au niveau de la couche protocolaire.

Dans le domaine des communications HF, les liens HF offrent notamment une capacité au-delà de l'horizon plus connue sous l'acronyme BLOS (Beyond Line of Sight) qui permet de réaliser des communications à longue voire très longue distance sans nécessiter le recours à un satellite ou à l'emploi de stations relais. Un des problèmes posés dans ces communications est de savoir accélérer la prise de liaison en mode synchrone ou en mode asynchrone afin d'offrir un temps de prise de liaison inférieur et donc une plus grande facilité d'emploi à l'utilisateur, et/ou un service plus rapide. Plusieurs techniques sont décrites dans l'art antérieur qui permettent d'accélérer des prises de liaison pour ces deux modes.

Par exemple, dans le cas d'une liaison asynchrone, la demande de brevet précitée du Demandeur préconise de réaliser une veille en parallèle côté récepteur.

Une autre amélioration consiste à adopter une prise de liaison synchrone, c'est-à-dire reposant sur une référence commune de temps, soit de type temps universel coordonné (UTC) ou par le partage d'une référence horaire par un maître de l'heure sur le réseau. L'approche synchrone est considérée comme la plus efficace à ce jour. Cette solution a permis d'améliorer le temps de prise de liaison, en contexte de charge réseau, généralement faible à moyenne. Un poste standard bande étroite se calant automatiquement sur le plan de veille synchrone par définition, il ne semble pas possible de proposer des améliorations notables à cette technique, sauf:

1) en réduisant le nombre de fréquences du plan, puisque la solution synchrone donne un temps de connexion moyen globalement proportionnel au nombre de fréquences du plan considéré,
2) en réalisant des écoutes multiples dans un même incrément temporel. Le brevet EP 2 418 892 réalise une prise de liaison en bande élargie de 6 à 24 KHz à partir d'une fréquence $F_0$.

Les techniques offertes actuellement par l'art antérieur présentent différents inconvénients.

Dans le cas des solutions asynchrones, il y a un problème de durée de convergence lorsque l'on a des plans de fréquence de grande taille, puisque la durée de l'appel est proportionnelle au nombre de fréquences du plan. On peut aussi voir des performances inférieures en charge faible ou moyenne par rapport à une approche synchrone.

Pour les solutions synchrones de type 3G, les techniques connues ne conduisent pas à un gain potentiel identifié, sauf en réduisant le nombre de fréquences. Mais dans ce cas il y a moins de fréquences possibles, un risque de ne pouvoir établir la liaison ou «non prise de liaison » si les fréquences sont non passantes, déjà utilisées ou brouillées.

La solution d'écoute multiple dans le même incrément temporel n'apporte pas de gain en mode synchrone, puisque l'émetteur n'émet que sur une fréquence. Les inconvénients qui en résultent sont un risque de perte de sensibilité du récepteur large bande en présence de brouilleurs ou pour la communication.

Le document EP 2 458 770 divulgue un procédé pour augmenter le débit utile d'une transmission HF en augmentant la largeur de canalisation globale tout en assurant que les perturbations inhérentes au canal de propagation HF n'affectent pas la transmission en limitant indirectement le débit utile.

Dans la suite de la description le terme « legacy » désigne un système ou standard historique reposant sur des transmissions en bande unique (ou par regroupement de plusieurs bandes contiguës), par exemple, ou plus généralement en bande étroite (c'est-à-dire quelques kHz à quelques dizaines de kHz). Le poste appelant correspond au poste ou dispositif de communication qui démarre la demande de communication. Le poste appelé est celui qui reçoit cette demande de communication.

Le procédé selon l'invention repose notamment sur le fait d'introduire une capacité large bande dans le système de communication au niveau de l'émission et/ou de la réception, d'organiser le plan de fréquences lors de la préparation de mission pour tenir compte des largeurs de bande en émission et en réception, d'exploiter cette capacité large bande en émission et/ou réception lors de la phase de prise de liaison (Automatic Link Establishment (ALE)).

L'invention concerne un procédé pour améliorer la prise de liaison en bande HF dans un système de communication comprenant un ou plusieurs postes émetteurs ou poste appelant et un ou plusieurs postes récepteurs ou poste appelé, un au moins des postes appelant ou appelé possédant une capacité large bande, caractérisé en ce qu'il comporte au moins les étapes suivantes :

- créer des bandes d'appel et d'écoute en fonction des capacités large bande en émission et/ou en réception, le nombre de fréquences du plan étant connu, le nombre de bandes minimal étant adapté à couvrir l'ensemble du plan de fréquences,
- minimiser le nombre de bandes et ensuite maximiser le nombre de fréquences dans chacune de ces bandes Bi de taille B,
- répartir les bandes Bi régulièrement dans le temps afin de minimiser le temps d'inter-écoute entre deux fréquences, éventuellement à des positions temporelles disponibles proches d'un découpage régulier, et attribuer une fréquence fj à chaque bande Bi afin de définir un plan de fréquences standard pour le fonctionnement du système,
- émettre/recevoir en large bande, en vérifiant que les fréquences d'émission sélectionnées ne sont pas déjà utilisées.

Selon un mode de réalisation, on répartit les bandes en les classant par cardinal décroissant et on dispose les bandes aux positions fréquentielles définies par $i + \left\lfloor k \times \dfrac{F}{card(B_i)} \right\rfloor$ ou à une place libre la plus proche possible de cette valeur, avec F est le nombre de fréquences du plan de fréquences, i est un indice qui varie de 1 à t nombre de bandes définies, k varie de 0 à $K_{i-1}$, où $K_i$ est le nombre de fréquences dans la bande $B_i$.

Selon un mode de réalisation, lorsque les bandes de fréquences se chevauchent, on répartit les bandes en privilégiant les bandes de cardinal le plus important. Selon une autre variante de réalisation, on va répartir les bandes de cardinal les plus faibles.

Les étapes du procédé selon l'invention sont exécutées pour les postes appelant et appelé.

Dans le cas d'une application émission et réception large bande, on impose que chaque bande de fréquences la plus étroite, située côté émission (respectivement réception) soit contenue dans la bande la plus large située côté réception (respectivement émission).

Dans le cas d'une prise de liaison asynchrone et une capacité large bande au niveau du poste appelant on applique, par exemple, une phase de prédiction afin de parcourir le plan de fréquences en fonction de la meilleure probabilité pour les fréquences d'être disponibles.

Selon un mode de réalisation le poste appelant a une capacité d'émission large bande et après une phase d'écoute avec transmission (ou LBT : Listen Before Transmit) sur une bande $B_i$, le poste appelant émet son appel sur l'ensemble des card(Bi) fréquences fk situées dans la bande d'émission $B_i$.

Selon un autre mode de mise en oeuvre, le poste appelé a aussi une capacité large bande et ayant détecté plusieurs fréquences d'appel, il détermine la fréquence sur laquelle il va répondre en choisissant la fréquence de meilleure qualité, ou celle qui est recommandée dans l'utilisation du système.

Pour le cas d'une communication synchrone avec un poste appelant en bande étroite, on introduit une capacité de passage en émission sur une autre fréquence si la fréquence courante n'est pas disponible.

Pour une communication synchrone avec un poste appelant large bande, le procédé émet, par exemple, simultanément sur plusieurs fréquences trouvées libre lors de la phase d'écoute LBT dans la bande d'émission dont la fréquence standard synchrone.

Le procédé peut comporter un mécanisme de passage en émission sur une autre bande ne comprenant pas la fréquence standard synchrone non disponible.

Selon un mode de réalisation, le poste appelé a aussi une capacité large bande et après avoir détecté plusieurs fréquences d'appel, il détermine la fréquence sur laquelle il va répondre en choisissant la fréquence de meilleure qualité, ou celle qui est recommandée dans l'utilisation du système

D'autres caractéristiques et avantages du procédé selon l'invention apparaîtront mieux à la lecture de la description qui suit d'un exemple de réalisation donné à titre illustratif et nullement limitatif annexé des figures qui représentent :

- La figure 1, un poste appelant et un poste appelé,
- La figure 2, une représentation de bandes de fréquences,
- La figure 3, une représentation des découpages éventuels pour le poste émission et le poste réception,
- La figure 4, un schéma d'appel et d'écoute pour un poste d'émission large bande et un poste de réception bande étroite,
- La figure 5, un schéma d'appel et d'écoute pour un poste d'émission large bande et un poste de réception large bande,
- La figure 6, un schéma d'appel et d'écoute pour le cas d'un poste de réception large bande couvrant l'ensemble du plan de fréquences autorisées,
- La figure 7, un schéma dans le cas d'un appel 3G synchrone,
- La figure 8, un schéma de principe de l'appel en ALE XL dans une solution synchrone, et
- La figure 9, un schéma de principe de l'appel en ALE XL.

L'exemple de la mise en oeuvre du procédé selon l'invention, aussi appelé par la suite ALE XL, est donné dans le cas d'un système comprenant un ou plusieurs postes en émission ayant une capacité d'émission large bande et un ou plusieurs postes en réception ayant une capacité de réception large bande. La largeur de bande du poste est supérieure à la largeur de bande du canal. Le procédé peut toutefois être utilisé dans le cas d'application où seul le poste à l'émission a une capacité large bande, ou bien seul le poste à la réception a une capacité large bande.

L'exemple qui suit est donné dans le cas d'un système de communication comprenant au moins un poste appelant 1 et au moins un poste appelé 2. Le poste appelant comprend un émetteur 10 couplé à une antenne 11 et un premier modem 12 et un microprocesseur 13 embarquant le contrôleur. Le poste appelé 2 comprend une seconde antenne 15, un récepteur 16 couplé à la seconde antenne, suivi d'un second modem 17 et d'un second microprocesseur 18 embarquant le second contrôleur. Les postes peuvent être des dispositifs de communication ou postes radio HF.

Dans l'exemple donné de mise en oeuvre du procédé selon l'invention, on suppose que c'est le poste appelant qui est à l'initiative de l'ouverture de la communication qui gère l'établissement de la communication et son maintien.

Lors de la planification du système, on choisit le plan de fréquences (ensemble S de fréquences autorisées), le poste appelant connait les fréquences sur lesquelles il peut émettre.

Le procédé selon l'invention comporte une étape 1A, consistant à créer des bandes d'appel et d'écoute en fonction des capacités d'un poste donné en réception RX (cas large bande) ou en émission TX (cas large bande).

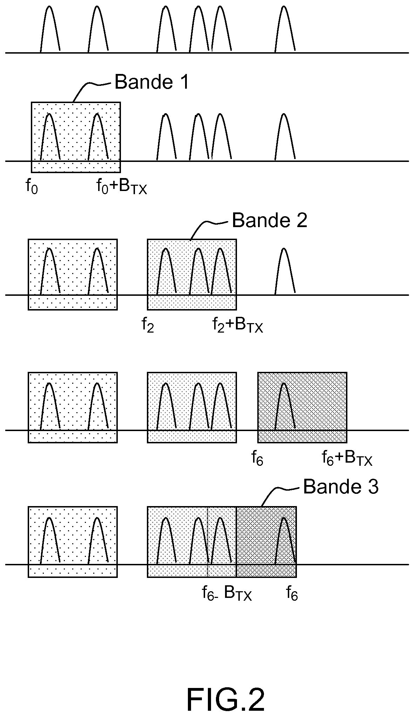

Le procédé va minimiser le nombre de bandes de taille B et maximiser le nombre de fréquences par bande. Ce procédé est illustré en figure 2. Soit $S=\{f_1,..f_F\}$ l'ensemble des F fréquences du plan ordonnées par ordre croissant. Soit $B_{TX}$ et $B_{RX}$ les largeurs de bande respectives en émission et en réception des postes large bande. En principe, $B_{TX} \leq GB_{RX}$ car il est plus aisé de réaliser un poste radio large bande en réception qu'en émission, nous prendrons donc par la suite cet exemple donné à titre illustratif et nullement limitatif et considérerons d'abord la découpe du plan en bandes de largeur maximale $B_{TX}$. Dans le cas où on aurait $B_{TX} \geq B_{RX}$, il suffit d'inverser et de commencer par le découpage en bandes de $B_{RX}$. Une première recherche de bandes est réalisée en parcourant le plan selon les fréquences croissantes : la première bande, $B_0$, est définie comme $[f_0, f_0+B_{TX}]$. Pour les autres bandes, itérativement, la bande suivante peut alors démarrer avec $h_i$ la prochaine fréquence dans l'ensemble S supérieure à $f_0+B_{TX}$. Cependant, comme on cherche à avoir le maximum de fréquences par bande, on cherche à appliquer un possible mécanisme de recalage, cherchant à augmenter le nombre de fréquences dans la bande : soit $h_j$ la fréquence la plus élevée de la bande $[h_i, h_i+B_{TX}]$. On définit alors la bande suivante $B_1$ comme une bande comme $[h_j - B_{TX}, h_j]$ ou indifféremment une bande centrée autour des fréquences de S comprenant le même nombre de fréquences de S que $[h_j - B_{TX}, h_j]$. On procède ainsi jusqu'à atteindre la dernière fréquence de S. Ce mécanisme est illustré dans la Figure 2 pour la troisième bande. La même recherche est ensuite réalisée en parcourant le plan selon les fréquences décroissantes. Ceci donne deux définitions possibles de bandes, et on retient comme plan définitif la configuration qui requiert le nombre le plus faible de bandes, et en cas d'égalité, la configuration qui comporte le plus grand nombre de fréquences de S répétées dans deux bandes.

Lorsque le plan de fréquences comprend des trous de largeur supérieure ou égale à la largeur de la taille $B_{TX}$ de la bande on va traiter le plan de fréquences comme autant de sous-plans de fréquences indépendants.

A l'issue de cette étape 1B, on dispose de $n_T$ bandes de largeur $B_{TX}$ : $B_i$ i=1..$n_T$.

L'étape suivante, 1C, consiste à répartir les bandes $B_i$ dans le temps pour minimiser le temps d'inter-écoute entre deux fréquences. On va répartir les bandes Bi, par exemple, à des positions temporelles disponibles proches d'un découpage parfaitement régulier dans le temps.

Une manière de procéder consiste par exemple à répartir les bandes $B_i$ dans le temps en classant les bandes $B_i$ par cardinal décroissant. On place chaque bande $B_i$ aux positions temporelles correspondant à une valeur de fréquence, les positions étant définies de la manière suivante $i + \left\lfloor k \times \dfrac{F}{K_i} \right\rfloor$ ou aux entiers proches disponibles, où $\llcorner x \lrcorner$ est l'entier le plus proche de x, F est le nombre de fréquences allouées, i est un indice qui varie de 1 (première bande choisie avec le cardinal le plus élevé ) à t nombre de bandes définies, $K_i$ est le nombre de fréquences dans la bande $B_i$, et k=0.. $K_i$-1. L'ordonnancement des bandes a pour objet de favoriser la régularité des ensembles de plus haut cardinal.

On attribue une fréquence $f_j$ à chaque instance des bandes $B_i$, ce qui définit le plan de fréquences standard applicable au cas bande étroite. En particulier, avec un poste actuel, ce sera un plan équivalent à celui du mode uniquement bande étroite.

Afin d'illustrer le principe mis en oeuvre par le procédé selon l'invention, un exemple est donné ci-après.

On considère, figure 2, trois bandes, $B_1$ ($K_1$=card($B_1$)=2, comprenant $f_1$ et $f_2$), $B_2$ ($K_2$=card($B_2$)= 3, comprenant $f_3$, $f_4$ et $f_5$), $B_3$ ($K_3$=card($B_3$)= 2, comprenant $f_6$ et $f_7$) et F=7 le nombre de fréquences.

En ordonnant par cardinal décroissant, on a donc $B_2$ - $B_1$ - $B_3$ et donc on obtient une répartition sur les 7 fréquences d'écoute

$$pour \quad 1+\left\lfloor k \times \frac{F}{card(B_2)} \right\rceil = 1 + \left\lfloor k \times \frac{7}{3} \right\rceil = \{1;3;6\} \quad \textit{la bande B2 est positionnée sur les positions 1, 3 et 6.}$$

| $B_2$ | -- | $B_2$ | -- | -- | $B_2$ | -- |
|---|---|---|---|---|---|---|
| Position 1 | Position 2 | Position 3 | Position 4 | Position 5 | Position 6 | Position 7 |

$$puis \; pour \quad 2+\left\lfloor k \times \frac{F}{card(B_1)} \right\rceil = 2 + \left\lfloor k \times \frac{7}{2} \right\rceil = \{2;5\} \quad \textit{la bande B1 est positionnée en 2 et 5.}$$

| $B_2$ | $B_1$ | $B_2$ | -- | $B_1$ | $B_2$ | -- |
|---|---|---|---|---|---|---|
| Position 1 | Position 2 | Position 3 | Position 4 | Position 5 | Position 6 | Position 7 |

$$puis \; pour \quad 3+\left\lfloor k \times \frac{F}{card(B_3)} \right\rceil = 3 + \left\lfloor k \times \frac{7}{2} \right\rceil = \{3;6\}$$

,

*les positions trouvées étant déjà occupées, on positionne la bande B3 aux positions disponibles les plus proches des valeurs trouvées, soit 4 et 7.*

| $B_2$ | $B_1$ | $B_2$ | $B_3$ | $B_1$ | $B_2$ | $B_3$ |
|---|---|---|---|---|---|---|
| Position 1 | Position 2 | Position 3 | Position 4 | Position 5 | Position 6 | Position 7 |

En plus de placer les bandes, on définit également le plan de fréquences nominal pour le cas synchrone, plan partagé par l'appelant et l'appelé, défini soit en préparation de mission, soit remis à jour par des moyens propres aux postes lorsque cela peut être fait sans risque de déviation entre les postes, ou remis à jour par diffusion par un maître du réseau. Ce plan de fréquences décrit ce qu'un poste bande étroite écoute. Logiquement, les F fréquences sont parcourues en prenant pour chaque bande une de ses fréquences, par exemple selon l'ordre des fréquences dans leur bande. On notera que l'effet de répartition des bandes mélange automatiquement les fréquences de manière régulière, ce qui est d'intérêt lorsque certaines sont passantes et d'autre pas. Ainsi on a au final dans cet exemple :

| $B_2$ | $B_1$ | $B_2$ | $B_3$ | $B_1$ | $B_2$ | $B_3$ |
|---|---|---|---|---|---|---|
| $f_3$ | $f_1$ | f4 | $f_6$ | $f_2$ | $f_5$ | $f_7$ |
| Position 1 | Position 2 | Position 3 | Position 4 | Position 5 | Position 6 | Position 7 |

Dans le cas particulier où les bandes se chevauchent, comme illustré en Figure 2, la méthode de calcul doit être adaptée puisque la somme des cardinaux des différentes bandes est strictement supérieure à F. La valeur Ki n'est pas le cardinal de Bi mais il est calculé dans le cas d'un chevauchement selon deux approches. La première consiste à privilégier les bandes de cardinal le plus important, de façon à accélérer la prise de liaison sur les fréquences situées dans ces bandes, au détriment des fréquences plus isolées. La seconde consiste à privilégier une uniformisation des performances, en acceptant de perdre sur certaines fréquences qui auraient pu être accélérées. La première approche permet d'afficher des temps moyens plus courts, mais des temps maximaux plus élevés, la seconde risque de dégrader le temps moyen mais en réduisant les temps maximaux. C'est à l'organisateur du réseau de choisir son approche. Dans tous les cas, il s'agit de définir comment calculer les positions, et de déterminer la répartition des $K_i$ en fonction des cardinaux des bandes. Dans tous les cas, les bandes se voient allouer les fréquences qu'elles ont en propre, il reste à allouer les fréquences partagées. Dans la première approche, on va favoriser les bandes de cardinal le plus élevé, dans la seconde on va favoriser les bandes de cardinal le plus faible.

Ainsi, en reprenant l'exemple de la figure 2, on trouve avec la première approche $K_1$=2, $K_2$=3 et $K_3$=1 et avec la seconde approche $K_1$=2, $K_2$=2 et $K_3$=2. Ceci nous permet d'aboutir aux deux réalisations suivantes :

| $B_2$ | $B_1$ | $B_3$ | $B_2$ | $B_1$ | $B_3$ |
|---|---|---|---|---|---|
| $f_3$ | $f_1$ | $f_5$ | $f_4$ | $f_2$ | $f_6$ |
| Position 1 | Position 2 | Position 3 | Position 4 | Position 5 | Position 6 |

ou

| $B_2$ | $B_1$ | $B_2$ | $B_1$ | $B_2$ | $B_3$ |
|---|---|---|---|---|---|
| $f_3$ | $f_1$ | $f_4$ | $f_2$ | $f_5$ | $f_6$ |
| Position 1 | Position 2 | Position 3 | Position 4 | Position 5 | Position 6 |

Dans le cas où l'émission et la réception sont « large bande », et si la largeur de bande d'émission $B_{TX}$ est différente de la largeur de bande de réception $B_{RX}$, on a deux découpages de bandes, et on impose que chaque bande la plus étroite soit contenue entièrement ou pas du tout dans une bande la plus large. Ceci a pour objet de faciliter les mécanismes d'adaptation et d'écoute en parallèle, puisque tout ensemble de fréquences dans la bande la plus étroite, par exemple d'émission (resp. de réception) fait partie de la même bande de réception (resp. d'émission). Cette découpe pour les bandes plus larges se fait aisément en transposant le mécanisme décrit précédemment pour le découpage en bandes par rapport à des fréquences au cas de bandes de largeur (par exemple si $B_{RX}$>$B_{TX}$) $B_{RX}$ par rapport à des bandes de largeur plus faible $B_{TX}$<$B_{RX}$.

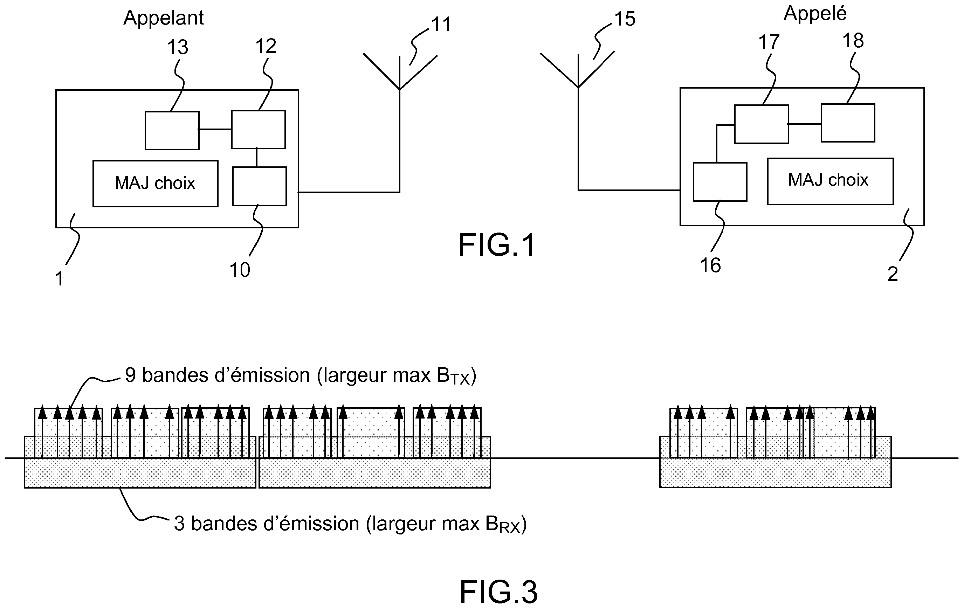

La figure 3 schématise ce cas avec 9 bandes d'émission pour la largeur $B_{TXmax}$ et 3 bandes de réception de largeur max $B_{RX}$.

Selon une variante de réalisation, il est possible de recalculer un nouveau plan de fréquences et augmenter le nombre de fréquences écoutées passantes et disponibles dans le cas où l'on dispose d'information de fréquences qui ne sont pas disponibles, par exemple des fréquences déjà utilisées, des fréquences non passantes ou même des fréquences qui seraient réservées à des utilisations spécifiques (par exemple appels d'urgence). Ce calcul peut être fait par chaque poste, appelant ou appelé, pour lui même en local, ou faire l'objet d'une diffusion par un poste maître dans le réseau.

La première étape, étape 1, a consisté à créer des bandes d'appel et d'écoute en fonction des capacités, large bande, en émission et/ou en réception. A la fin de cette étape, on a donc Bi, i=1..t bandes côté émission, chacune contenant card(Bi) fréquences avec $\sum_{i=1}^{t} card(B_i) \geq F$ où F est le cardinal de S, et Cj, j= 1, .,r côté réception chacune contenant card(Cj) fréquences avec $\sum_{j=1}^{r} card(C_j) \geq F$ .

La deuxième étape, étape 2, est l'accélération de la prise de liaison. On va distinguer le cas synchrone ou le cas asynchrone.

Dans le cas d'une communication asynchrone, le cas où la capacité large bande est côté récepteur, avec une émission bande étroite a déjà été traité dans le cadre de la demande de brevet du demandeur EP 2 744 263. Le procédé s'applique au cas où la capacité large bande est assurée côté émission (poste appelant) et seulement optionnelle du côté réception (poste appelé). Le poste appelant reste sur une contrainte d'appel de durée minimale qui est liée au parcours du plan de fréquences en réception bande étroite du poste appelé.

Une première possibilité pour accélérer la prise de liaison consiste à appliquer une phase de prédiction permettant de parcourir le plan de fréquences en fonction de la meilleure probabilité pour les fréquences d'être passantes/non occupées. Cette phase peut être réalisée soit sur la base de recommandations venant d'outils de prédiction (par exemple VOACAP pour Voice of America Coverage Analysis Program), ou d'évaluations de qualité de lien faites au cours de communications précédentes, ou enfin d'informations extérieures, par exemple venant de phases de veille, ou d'informations diffusées par un possible maître du réseau.

Une seconde possibilité, pouvant être combinée à la première, consiste à employer la capacité d'émission large bande du côté du poste appelant. Le poste appelant va parcourir successivement les différentes bandes Bi et pour chacune commencer par une phase d'écoute (aussi appelée LBT: Listen Before Transmit) destinée à détecter les fréquences déjà occupées. Il émettra alors son appel sur l'ensemble des card(Bi) fréquences fk situées dans cette bande d'émission $B_i$ et non occupées. Ce nombre de fréquences dépend du plan de fréquences alloué et est compris entre 1 et F, avec F le nombre de fréquences du plan d'émission. Un poste bande étroite en réception ne capte sur chaque créneau temporel d'écoute qu'une fréquence, mais il multiplie ses chances de prendre la liaison du nombre de fréquences d'émission colocalisées.

Dans le cas où le poste appelé dispose aussi d'une capacité large bande, après avoir détecté plusieurs fréquences d'appel, le poste appelé détermine la fréquence sur laquelle il va répondre en choisissant la fréquence de meilleure qualité, ou celle qui est recommandée dans l'utilisation du système.

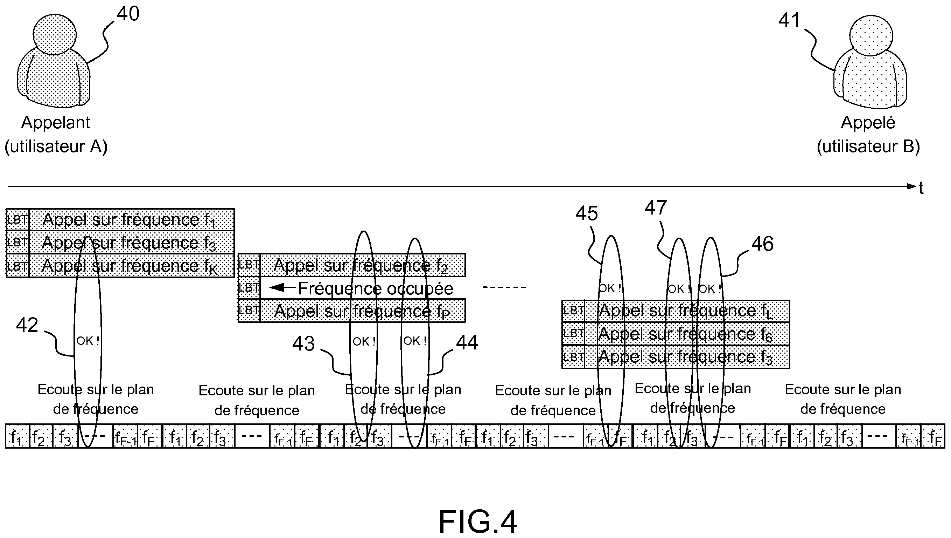

La figure 4 schématise un tel schéma. A titre d'exemple dans cette figure on a reporté plusieurs points où la communication peut être prise (point représenté par le OK !). Ainsi, le poste appelant 40 émet dans un premier intervalle temporel un appel sur la fréquence $f_1$, un appel sur la fréquence f3, un appel sur la fréquence fk, le poste appelé ou récepteur 41 écoute sur le plan de fréquences. Sur la figure 4 le poste appelé peut recevoir l'appel sur la fréquence $f_3$, 42, ou bien recevoir 43, 44 l'appel sur la fréquence $f_2$, ou sur la fréquence fp, puis finalement peut recevoir 45, 46, 47, les fréquences $f_L$, $f_6$ ou $f_3$. On voit que lorsque le LBT permet de détecter une fréquence utilisée, l'émetteur n'émet par sur la totalité des fréquences existants dans la bande d'appel Bi.

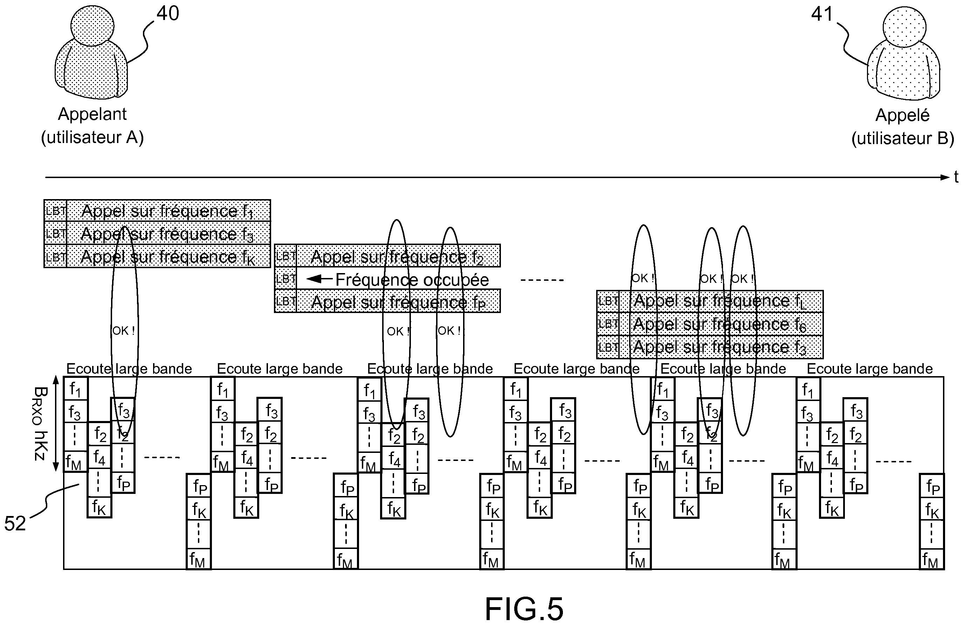

Un poste large bande en réception aura la capacité d'écouter en parallèle les différentes transmissions du poste émetteur, et de choisir de répondre sur l'une des fréquences. Par exemple, il peut choisir de répondre sur la fréquence de meilleure qualité, la fréquence qui fait partie des fréquences recommandées, d'une fréquence issue d'un choix aléatoire, etc. selon un principe de choix connu de l'Homme du métier. Par défaut on prend celle dont la qualité estimée par le poste récepteur est la meilleure. Ceci offre donc une capacité de sélectionner non seulement plus vite une fréquence mais également une fréquence de meilleure qualité. La figure 5 illustre un exemple de fonctionnement entre le poste appelant large bande 40 et un poste appelé 41 large bande dans le cas d'une communication asynchrone. Le poste appelé à une bande $B_{RX}$ large bande, il écoute en parallèle sur plusieurs fréquences. Par exemple il va écouter, 52, sur les fréquences $f_1$, $f_3$, . , $f_M$, l'appel émis par l'appelant sur la fréquence $f_1$, l'appel émis sur la fréquence $f_3$, l'appel émis sur la fréquence $f_K$ et ainsi de suite. Le poste appelé, grâce au procédé selon l'invention, est donc capable d'écouter sur une bande plus large que la bande étroite traditionnelle, donc de capter plusieurs fréquences en parallèle. Le nombre de fréquences écoutées dépend du plan de fréquence alloué, il est égal à card($C_j$), et est compris entre 1 et F.

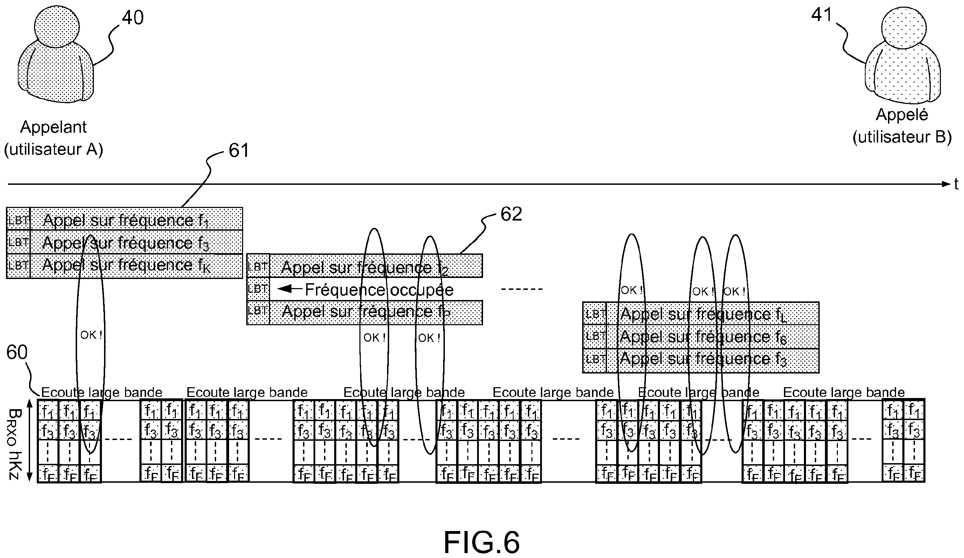

Dans le cas où la bande de réception $B_{RX}$ est supérieure ou égale à la bande totale comprenant l'ensemble des F fréquences du plan, l'écoute large bande est continue, 60, comme il est illustré à la figure 6. Le récepteur couvre l'ensemble des fréquences du plan, et comme il est représenté sur la figure 6, on voit que le récepteur écoute sur toutes les fréquences $f_1$,... $f_F$, les appels représentés par le premier groupe $f_1$, $f_3$, $f_K$, 61, le deuxième groupe $f_1$, $f_5$, fp, 62, et ainsi de suite.

Dans un cas particulier, où en phase de préparation de mission on saurait que les postes du réseau seront tous large bande au moins en réception, on peut réduire la durée de l'appel asynchrone en tenant compte de la capacité large bande en réception, ce qui permettra d'accélérer le temps moyen de prise de liaison.

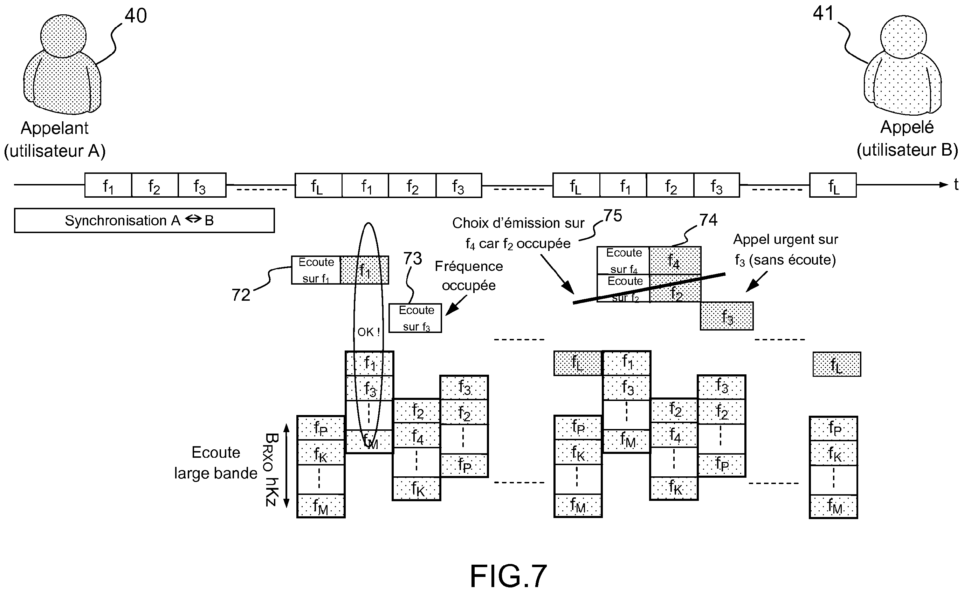

Dans le cas où l'on considère une prise de liaison synchrone, différentes variantes de réalisation peuvent être mises en oeuvre. On rappelle que la phase de synchronisation est notée dans les figures 7 à 9 pour mémoire car elle peut avoir lieu précédemment, ou être absente comme par exemple lorsque les postes disposent tous d'une source UTC.

La figure 7 schématise une première variante où l'on a une voie émission bande étroite, utilisateur appelant 40, qui appelle successivement et selon le plan sur les fréquences $f_1$, f2, $f_3$ et $f_L$, après à chaque fois une phase d'écoute préalable sur la fréquence pour éviter de brouiller involontairement une fréquence déjà utilisée. Seuls des cas d'appel urgents/prioritaires peuvent en général faire l'économie d'une telle phase de LBT. L'appelant 40, écoute, 72, sur une première fréquence $f_1$, puis il émet sur la fréquence $f_1$. Le poste appelé 41, écoute en large bande sur une bande Bi. Le poste appelant écoute, 73, sur $f_3$, si $f_3$ est occupée, il n'émet pas dans le créneau temporel suivant. Il aura alors deux options (non représentées sur la figure): soit il choisit d'attendre pour continuer normalement le créneau encore suivant à écouter $f_5$ avant d'émettre dessus, soit il procèdera immédiatement à une écoute sur $f_4$ en vue d'émettre sur $f_4$. Dans le cas où le poste a connaissance par avance du fait qu'une fréquence n'est pas disponible, par exemple parce qu'il l'a écouté très récemment, ou parce qu'un outil de prédiction a permis de savoir que la fréquence n'était pas passante, ou enfin éventuellement parce qu'il a eu cette information par un autre poste, le poste appelant pourra décider de ne pas réaliser les actions prévues d'écoute sur $f_i$ puis d'émission sur $f_i$ mais de basculer sur une autre fréquence $f_j$ sous réserve que $f_j$ appartienne à la même bande de réception que $f_i$. En effet, un poste bande étroite en réception ne sera pas désavantagé puisque fi n'est de toute façon pas utilisable, et un poste large bande en réception saura écouter fj et donc potentiellement répondre si cette fréquence est libre et de qualité. Par exemple, sur la figure on voit qu'après avoir écouté, le poste appelant note que la fréquence $f_2$ est occupée 75, et donc il va émettre sur la fréquence $f_4$ disponible 74. Les appels d'urgence, comme précédemment, sont autorisés sans écoute.

Dans le cas où le poste appelé dispose d'une écoute en large bande, après avoir détecté plusieurs fréquences d'appel, le poste appelé détermine, par exemple, la fréquence sur laquelle il va répondre en choisissant la fréquence de meilleure qualité, ou celle qui est recommandée dans l'utilisation du système

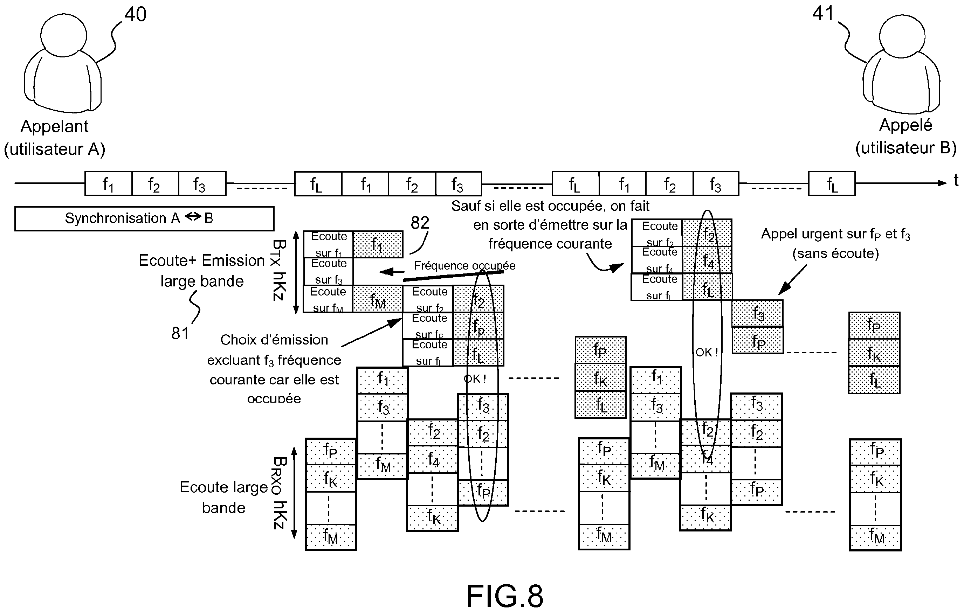

La figure 8 illustre un cas d'utilisation pour une voie d'émission large bande. Dans ce cas le poste appelant sait émettre de façon simultanée sur plusieurs fréquences dans sa bande d'émission $B_i$.

Le poste appelant a une capacité d'écoute et d'émission large bande et le poste appelé à une écoute large bande. Le poste appelant va tirer parti de sa capacité d'écoute et d'émission large bande pour réaliser en parallèle plusieurs LBT : écoute, 81, sur $f_1$, $f_3$, $f_M$, pour décider des appels qu'il peut passer (fréquences non occupées) et ensuite appeler, 82, sur les fréquences disponibles $f_1$, , $f_M$ dans l'exemple, multipliant ainsi les opportunités d'être détecté par le poste appelé. Afin de continuer à être détecté par un poste appelé bande étroite, l'appelant prend soin de toujours inclure la fréquence fi standard dans son plan, sauf si celle-ci est occupée, cas dans lequel on accepte alors éventuellement d'émettre sur une autre bande plus favorable et compatible de la capacité de réception large bande du poste appelé. Dans l'exemple on voit ainsi le poste appelant basculer sur $f_2$, $f_p$, $f_L$ car $f_3$ est occupée, 83.

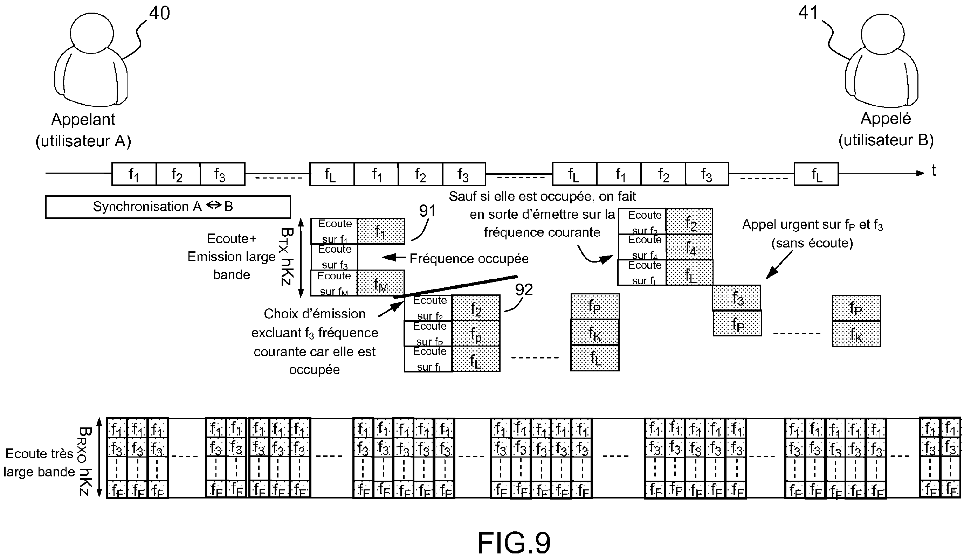

La figure 9 illustre le cas où la bande de réception $B_{RX}$ est supérieure ou égale à la bande totale comprenant l'ensemble des F fréquences de S, permettant une écoute large bande continue. Le récepteur couvre l'ensemble des fréquences du plan, et donc écoute systématiquement toutes les fréquences.

Le poste appelant scrute les fréquences disponibles du plan de fréquence, dans l'exemple il détermine, par exemple que la fréquence $f_3$ est occupée, 91, le poste appelant va donc faire un choix démission excluant la fréquence $f_3$, fréquence courante qui est occupée. Il va donc passer, 92, à une écoute sur $f_2$, $f_p$ et $f_L$, et si les fréquences sont disponibles il va émettre sur ces fréquences. Les appels d'urgence sont toujours envisageables sans écoute préalable. Le poste appelé va écouter sur l'ensemble de la bande $f_1$, $f_3$, .., $f_F$.

Le procédé selon l'invention présente notamment comme avantage d'accélérer la prise de liaison grâce à une mise en parallèle des traitements et, dans certains cas, à l'application sur un poste bande étroite d'une stratégie de repli vers une fréquence plus propice à l'établissement du lien. De plus la capacité large bande peut permettre de sélectionner une fréquence de meilleure qualité dans le temps, voire un temps inférieur à la procédure standard bande étroite.

## Revendications

1. Procédé pour améliorer la prise de liaison en bande HF dans un système de communication comprenant un ou plusieurs postes émetteurs ou poste appelant (1, 40) et un ou plusieurs postes récepteurs ou poste appelé (2, 41), un au moins des postes appelant ou appelé possédant une capacité large bande, **caractérisé en ce qu'**il comporte au moins les étapes suivantes :

   • créer des bandes d'appel et d'écoute en fonction des capacités large bande en émission et/ou en réception, le nombre de fréquences étant connu, le nombre de bandes minimal étant adapté à couvrir l'ensemble du plan de fréquences,
   • minimiser le nombre de bandes et ensuite maximiser le nombre de fréquences dans chacune de ces bandes Bi de taille B,
   • répartir les bandes Bi régulièrement dans le temps afin de minimiser le temps d'inter-écoute entre deux fréquences, à des positions temporelles disponibles proches d'un découpage régulier, et attribuer une fréquence fj à chaque bande Bi afin de définir un plan de fréquences standard pour le fonctionnement du système,
   • émettre/recevoir en large bande, en vérifiant que les fréquences d'émission sélectionnées ne sont pas déjà utilisées.

2. Procédé selon la revendication 1 **caractérisé en ce que** l'on répartit les bandes en les classant par cardinal décroissant et on dispose les bandes aux positions fréquentielles définies par $i + \left\lfloor k \times \dfrac{F}{card(B_i)} \right\rfloor$ ou à une place libre la plus proche possible de cette valeur, avec F est le nombre de fréquences du plan de fréquences, i est un indice qui varie de 1 à t nombre de bandes définies, k varie de 0 à $K_{i-1}$, où $K_i$ est le nombre de fréquences dans la bande $B_i$.

3. Procédé selon la revendication 1 **caractérisé en ce que** dans le cas de bandes de fréquences qui se chevauchent on répartit les bandes en privilégiant les bandes de cardinal le plus important.

4. Procédé selon la revendication 1 **caractérisé en ce que** dans le cas où les bandes se chevauchent, on dispose les bandes en privilégiant les bandes de cardinal les plus faibles.

**5.** Procédé selon l'une des revendications 1 à 4 **caractérisé en ce que** l'on exécute ces étapes pour les postes appelant (40) et appelé (41).

**6.** Procédé selon la revendication 5 **caractérisé en ce que** dans le cas d'une application émission et réception large bande, on impose que chaque bande de fréquences la plus étroite, située côté émission (resp. réception) soit contenue dans la bande la plus large située côté réception (resp. émission).

**7.** Procédé selon l'une des revendications précédentes dans le cas d'une prise de liaison asynchrone et une capacité large bande au niveau du poste appelant on applique une phase de prédiction afin de parcourir le plan de fréquences en fonction de la meilleure probabilité pour les fréquences d'être disponibles.

**8.** Procédé selon l'une des revendications précédentes **caractérisé en ce que** le poste appelant a une capacité d'émission large bande et **en ce que** après une phase d'écoute LBT sur une bande $B_i$, le poste appelant émet son appel sur l'ensemble des card(Bi) fréquences fk situées dans la bande d'émission $B_i$, et qui n'ont pas été détectées comme déjà occupées.

**9.** Procédé selon l'une des revendications 7 ou 8 **caractérisé en ce que** le poste appelé a aussi une capacité large bande et qu'ayant détecté plusieurs fréquences d'appel, il détermine la fréquence sur laquelle il va répondre en choisissant la fréquence de meilleure qualité, ou celle qui est recommandée dans l'utilisation du système.

**10.** Procédé selon les revendications 1 à 6 pour le cas d'une communication synchrone avec un poste appelant en bande étroite, on introduit une capacité de passage en émission sur une autre fréquence si la fréquence courante n'est pas disponible.

**11.** Procédé selon les revendications 1 à 6 pour une communication synchrone avec un poste appelant large bande, le procédé émet simultanément sur plusieurs fréquences trouvées libre lors de la phase d'écoute LBT dans la bande d'émission dont la fréquence standard synchrone.

**12.** Procédé selon la revendication 11 **caractérisé en ce qu'**il comporte un mécanisme de passage en émission sur une autre bande ne comprenant pas la fréquence standard synchrone non disponible.

**13.** Procédé selon l'une des revendications 10 à 12 **caractérisé en ce que** le poste appelé a aussi une capacité large bande et après avoir détecté plusieurs fréquences d'appel, il détermine la fréquence sur laquelle il va répondre en choisissant la fréquence de meilleure qualité, ou celle qui est recommandée dans l'utilisation du système.

**Patentansprüche**

**1.** Verfahren zum Verbessern der Verbindungsherstellung im HF-Band in einem Kommunikationssystem, das eine oder mehrere Senderstationen oder rufende Stationen (1, 40) und eine oder mehrere Empfängerstationen oder angerufene Stationen (2, 41) umfasst, wobei wenigstens eine der rufenden oder angerufenen Stationen eine Breitbandkapazität besitzt, **dadurch gekennzeichnet, dass** es wenigstens die folgenden Schritte beinhaltet:

• Erzeugen von Ruf- und Horchbändern in Abhängigkeit von Breitbandkapazitäten bei Sendung und/oder Empfang, wobei die Anzahl von Frequenzen bekannt ist, wobei die Mindestzahl von Bändern so ausgelegt ist, dass die Gesamtheit des Frequenzplans abgedeckt wird,
• Minimieren der Anzahl von Bändern und dann Maximieren der Anzahl von Frequenzen in jedem dieser Bi-Bänder mit Größe B,
• zeitlich gleichmäßiges Verteilen der Bi-Bänder, um die Interabhörenzeiten zwischen zwei Frequenzen zu minimieren, auf verfügbare zeitliche Positionen in der Nähe eines regelmäßigen Schnitts, und Zuordnen einer Frequenz fj zu jedem Bi-Band, um einen standardmäßigen Frequenzplan für den Betrieb des Systems zu definieren,
• Senden/Empfangen im Breitband unter Verifizierung, dass die gewählten Sendefrequenzen nicht bereits benutzt werden.

**2.** Verfahren nach Anspruch 1, **dadurch gekennzeichnet, dass** die Bänder durch Klassifizieren nach absteigender Mächtigkeit verteilt werden und die Bänder auf den durch $i + \left\lfloor k \times \dfrac{F}{card(B_i)} \right\rceil$ definierten Frequenzpositionen oder an einer nächstmöglichen freien Stelle zu diesem Wert angeordnet werden, wobei F die Anzahl von Frequenzen des Frequenzplans ist, i ein Index ist, der von der Anzahl 1 bis t von definierten Bändern variiert, k von 0 bis $K_{i-1}$ variiert, wobei $K_i$ die Anzahl von Frequenzen im $B_i$-Band ist.

3. Verfahren nach Anspruch 1, **dadurch gekennzeichnet, dass** im Falle von Frequenzbändern, die sich überlappen, die Bänder unter Privilegierung der Bänder mit der höchsten Mächtigkeit verteilt werden.

4. Verfahren nach Anspruch 1, **dadurch gekennzeichnet, dass** in dem Fall, in dem sich die Bänder überlappen, die Bänder unter Privilegierung der Bänder mit der geringsten Mächtigkeit verteilt werden.

5. Verfahren nach einem der Ansprüche 1 bis 4, **dadurch gekennzeichnet, dass** diese Schritte für die rufenden (40) und gerufenen (41) Stationen ausgeführt werden.

6. Verfahren nach Anspruch 5, **dadurch gekennzeichnet, dass** im Falle einer Breitbandsende- und -empfangsanwendung bewirkt wird, dass jedes schmalste Frequenzband, das sich auf der Sendeseite (bzw. der Empfangsseite) befindet, im breitesten Band enthalten ist, das sich auf der Empfangsseite (bzw. Sendeseite) befindet.

7. Verfahren nach einem der vorherigen Ansprüche, wobei im Falle einer asynchronen Verbindungsherstellung und einer Breitbandkapazität an der rufenden Station eine Vorhersagephase angewendet wird, um den Frequenzplan in Abhängigkeit von der besten Wahrscheinlichkeit zu durchlaufen, dass die Frequenzen verfügbar sind.

8. Verfahren nach einem der vorherigen Ansprüche, **dadurch gekennzeichnet, dass** die rufende Station eine Breitbandsendekapazität hat, und dadurch, dass nach einer Horchphase LBT auf einem $B_i$-Band die rufende Station ihren Ruf auf der Gesamtheit der Karte(Bi)-Frequenzen fk sendet, die sich im Sendeband $B_i$ befinden und die nicht als bereits belegt erkannt wurden.

9. Verfahren nach Anspruch 7 oder 8, **dadurch gekennzeichnet, dass** die gerufene Station ebenfalls eine Breitbandkapazität hat und dass sie, wenn mehrere Ruffrequenzen erkannt wurden, die Frequenz feststellt, auf der sie antworten, durch Wählen der Frequenz mit der höchsten Qualität oder derjenigen, die in der Nutzung des Systems empfohlen wird.

10. Verfahren nach den Ansprüchen 1 bis 6, wobei im Falle einer synchronen Kommunikation mit einer rufenden Station im Schmalband eine Durchgangskapazität beim Senden auf einer anderen Frequenz eingeführt wird, wenn die laufende Frequenz nicht verfügbar ist.

11. Verfahren nach den Ansprüchen 1 bis 6 für eine synchrone Kommunikation mit einer rufenden Breitbandstation, wobei das Verfahren gleichzeitig auf mehreren Frequenzen sendet, die in der Horchphase LBT im Sendeband frei sind, deren Standardfrequenz synchron ist.

12. Verfahren nach Anspruch 11, **dadurch gekennzeichnet, dass** es einen Durchgangsmechanismus beim Senden auf einem anderen Band umfasst, das nicht die unverfügbare synchrone Standardfrequenz umfasst.

13. Verfahren nach einem der Ansprüche 10 bis 12, **dadurch gekennzeichnet, dass** die gerufene Station ebenfalls eine Breitbandkapazität hat und nach dem Erkennen von mehreren Ruffrequenzen die Frequenz feststellt, auf der sie antworten wird, durch Wählen der Frequenz mit der höchsten Qualität oder derjenigen, die in der Nutzung des Systems empfohlen wird.

**Claims**

1. Method for improving the HF band link establishment in a communication system comprising one or more transmit terminals or calling terminals (1, 40) and one or more receive terminals or called terminals (2, 41), at least one of the calling or called terminals having a broadband capability, comprising at least the following steps:

• creating call bands and listening bands according to the broadband transmit and/or receive capabilities, the number of frequencies being known, the minimum number of bands being suitable for covering the entire frequency plan,
• minimising the number of bands and then maximising the number of frequencies in each of these bands Bi of size B,
• distributing the bands $B_i$ regularly in time in order to minimise the inter-listening time between two frequencies, at available temporal positions close to a regular subdivision, and allocating a frequency fj to each band Bi in order to define a standard frequency plan for the operation of the system,
• transmitting/receiving in broadband mode, by checking that the selected transmit frequencies are not already in use.

2. Method according to Claim 1, **characterized in that** the bands are distributed by arranging them in descending cardinal-value order and placing the bands in frequency positions defined by $i + \left\lfloor k \times \dfrac{F}{card(B_i)} \right\rfloor$ or in a free position as close as possible to this value, where F is the number of frequencies of the frequency plan, i is an index that varies from 1 to t number of defined bands, k varies from 0 to $K_{i-1}$, where $K_i$ is the number of frequencies in the band $B_i$.

3. Method according to Claim 1, **characterized in that**, in the case of frequency bands which overlap, the bands are distributed by prioritising the bands with the highest cardinal value.

4. Method according to Claim 1, **characterized in that**, if the bands overlap, the bands are arranged by prioritising the bands with the lowest cardinal values.

5. Method according to one of claims 1 to 4 **characterized in that** these steps are carried out for the calling terminals (40) and called terminals (41).

6. Method according to Claim 5, **characterized in that**, in the case of a broadband transmit and receive application, each narrowest frequency band located on the transmit (or respectively the receive) side must be contained in the broadest band located on the receive (or respectively the transmit) side.

7. Method according to one of the preceding Claims in the case of an asynchronous link establishment and a broadband capability in the calling terminal, a prediction phase is applied in order to scan the frequency plan according to the highest probability of the frequencies being available.

8. Method according to to one of the preceding Claims **characterized in that** the calling terminal has a broadband transmit capability and **in that**, following an LBT listening phase on a band $B_i$, the calling terminal transmits its call over all of the card($B_i$) frequencies fk which are located in the transmit band $B_i$ and have not been detected as occupied.

9. Method according to one of Claims 7 or 8 **characterized in that** the called terminal also has a broadband capability and, having detected a plurality of call frequencies, it determines the frequency on which it will reply by choosing the highest-quality frequency or the frequency that is recommended in the use of the system.

10. Method according to Claims 1 to 6 in the case of a synchronous call with a narrowband calling terminal, a capability to switch over to transmit on a different frequency is introduced if the current frequency is not available.

11. Method according to to Claims 1 to 6 for a synchronous call with a broadband calling terminal, the method transmits simultaneously on a plurality of frequencies found to be free during the LBT listening phase in the transmit band including the standard synchronous frequency.

12. Method according to Claim 11 **characterized in that**, it comprises a mechanism for switching over to transmit on a different band not including the unavailable standard synchronous frequency.

13. Method according to one of Claims 10 to 12, **characterized in that** the called terminal also has a broadband capability and, after having detected a plurality of call frequencies, it determines the frequency on which it will reply by choosing the highest-quality frequency or the frequency that is recommended in the use of the system.

Appelant

13  12  ⌒11  ⌒15  Appelé

17  18

┌──────────────────┐
│  ┌────┐  ┌────┐  │
│  │    │  │    │  │
│  ┌──────┐ ┌────┐ │
│  │MAJ choix│ │  │ │
│  └──────┘ └────┘ │
└──────────────────┘

1  10

┌──────────────────┐
│  ┌────┐  ┌────┐  │
│  │    │  │    │  │
│  ┌────┐ ┌──────┐ │
│  │    │ │MAJ choix│ │
│  └────┘ └──────┘ │
└──────────────────┘

16  2

**FIG.1**

9 bandes d'émission (largeur max $B_{TX}$)

3 bandes d'émission (largeur max $B_{RX}$)

**FIG.3**

EP 2 830 256 B1

Bande 1

$f_0$     $f_0+B_{TX}$

Bande 2

$f_2$     $f_2+B_{TX}$

$f_6$     $f_6+B_{TX}$

Bande 3

$f_{6-}B_{TX}$     $f_6$

# FIG.2

FIG.4

FIG.5

EP 2 830 256 B1

FIG.6

40

Appelant
(utilisateur A)

41

Appelé
(utilisateur B)

| $f_1$ | $f_2$ | $f_3$ | | $f_L$ | $f_1$ | $f_2$ | $f_3$ | | $f_L$ | $f_1$ | $f_2$ | $f_3$ | | $f_L$ |

t

Synchronisation A ⟷ B

Choix d'émission sur
$f_4$ car $f_2$ occupée

75

74

Appel urgent sur
$f_3$ (sans écoute)

Ecoute
sur $f_1$

$f_1$

73

72

OK !

Fréquence
occupée

Ecoute
sur $f_3$

Ecoute
sur $f_4$

$f_4$

Ecoute
sur $f_2$

$f_2$

$f_3$

$f_1$

$f_L$

$f_1$

$f_L$

$f_3$

$f_3$

$f_3$

$f_3$

$f_2$

$f_2$

$f_2$

$f_2$

Ecoute
large bande

$B_{RXO}$ hKz

$f_P$

$f_K$

$f_M$

$f_M$

$f_4$

$f_K$

$f_P$

$f_P$

$f_K$

$f_M$

$f_4$

$f_K$

$f_P$

$f_P$

$f_K$

$f_M$

**FIG.7**

# FIG.8

40 Appelant (utilisateur A)

41 Appelé (utilisateur B)

$f_1$ $f_2$ $f_3$ -------- $f_L$ $f_1$ $f_2$ $f_3$ -------- $f_L$ $f_1$ $f_2$ $f_3$ -------- $f_L$ → t

Synchronisation A ⬌ B

Ecoute+ Emission large bande

$B_{TX}$ hKz

Ecoute sur $f_1$ | $f_1$
Ecoute sur $f_3$
Ecoute sur $f_M$ | $f_M$

91

Fréquence occupée

Choix d'émission excluant $f_3$ fréquence courante car elle est occupée

Ecoute sur $f_2$ | $f_2$
Ecoute sur $f_P$ | $f_P$
Ecoute sur $f_I$ | $f_I$

92

Sauf si elle est occupée, on fait en sorte d'émettre sur la fréquence courante

Ecoute sur $f_2$ | $f_2$
Ecoute sur $f_4$ | $f_4$
Ecoute sur $f_I$ | $f_L$

$f_P$
$f_K$
$f_L$

Appel urgent sur $f_P$ et $f_3$ (sans écoute)

$f_3$
$f_P$

------- 

$f_P$
$f_K$

Ecoute très large bande

$B_{RXO}$ hKz

$f_1$ $f_1$ $f_1$   $f_1$ $f_1$ $f_1$ $f_1$ $f_1$   $f_1$ $f_1$ $f_1$ $f_1$ $f_1$   $f_1$ $f_1$ $f_1$ $f_1$ $f_1$   $f_1$ $f_1$ $f_1$ $f_1$ $f_1$   $f_1$ $f_1$ $f_1$ $f_1$ $f_1$   $f_1$ $f_1$

$f_3$ $f_3$ $f_3$ ---- $f_3$ $f_3$ $f_3$ $f_3$ $f_3$ ---- $f_3$ $f_3$ $f_3$ $f_3$ $f_3$ ---- $f_3$ $f_3$ $f_3$ $f_3$ $f_3$ ---- $f_3$ $f_3$ $f_3$ $f_3$ $f_3$ ---- $f_3$ $f_3$ $f_3$ $f_3$ $f_3$ --- $f_3$ $f_3$

$f_F$ $f_F$ $f_F$   $f_F$ $f_F$ $f_F$ $f_F$ $f_F$   $f_F$ $f_F$ $f_F$ $f_F$ $f_F$   $f_F$ $f_F$ $f_F$ $f_F$ $f_F$   $f_F$ $f_F$ $f_F$ $f_F$ $f_F$   $f_F$ $f_F$ $f_F$ $f_F$ $f_F$   $f_F$ $f_F$

FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2744263 A
- EP 2418892 A

- EP 2458770 A